# FASCICULE DE BREVET EUROPEEN

(11) **EP 1 619 590 B1**
(45) Date de publication et mention de la délivrance du brevet: **03.10.2007**
(21) Numéro de dépôt: 05291478.5
(22) Date de dépôt: 07.07.2005
(51) Int. Cl.: G06F 13/28

(54) **Procédé de programmation d'un contrôleur de DMA dans un système sur puce et système sur puce associé**
Verfahren zur Programmierung einer System auf Chip DMA Steuerung, sowie ein System auf Chip dafür.
Method for programming a system on a chip DMA controller and system on a chip therefore.

(30) Priorité: 21.07.2004 FR 0408084
(43) Date de publication de la demande: 25.01.2006
(73) Titulaire: STMicroelectronics SA, 92120 Montrouge (FR)
(72) Inventeur: Nicolai, Jean, 13790 Chateauneuf le Rouge (FR); Martinez, Albert, 13320 Bouc Bel Air (FR)
(74) Mandataire: Verdure, Stéphane

(56) Documents cités:
- EP-A- 0 447 145
- PATENT ABSTRACTS OF JAPAN vol. 017, no. 662 (P-1655), 7 décembre 1993 (1993-12-07) & JP 05 216809 A (NEC CORP), 27 août 1993 (1993-08-27)
- BLUMRICH M A ET AL: "Protected, user-level DMA for the SHRIMP network interface" HIGH-PERFORMANCE COMPUTER ARCHITECTURE, 1996. PROCEEDINGS., SECOND INTERNATIONAL SYMPOSIUM ON SAN JOSE, CA, USA 3-7 FEB. 1996, LOS ALAMITOS, CA, USA,IEEE COMPUT. SOC, US, 3 février 1996 (1996-02-03), pages 154-165, XP010162056 ISBN: 0-8186-7237-4
- MARKATOS E P ET AL: "User-level DMA without operating system kernel modification" HIGH-PERFORMANCE COMPUTER ARCHITECTURE, 1997., THIRD INTERNATIONAL SYMPOSIUM ON SAN ANTONIO, TX, USA 1-5 FEB. 1997, LOS ALAMITOS, CA, USA,IEEE COMPUT. SOC, US, 1 février 1997 (1997-02-01), pages 322-331, XP010213223 ISBN: 0-8186-7764-3

## Description

La présente invention concerne les systèmes intégrés sur silicium ou SoC (de l'anglais "System On Chip"), comprenant au moins une unité centrale de traitement ou CPU ("Central Processing Unit") sur laquelle des programmes peuvent s'exécuter, un contrôleur d'accès direct à la mémoire ou contrôleur de DMA ("Direct Memory Access"), une mémoire et une unité de gestion de mémoire ou MMU ("Memory Management Unit").

De tels SoC sont par exemple présents dans des appareils électroniques tels qu'un ordinateur à usage général, un boîtier décodeur ou "Set-Top-Box", un assistant numérique personnel ou PDA ("Personal Digital Assistant"), un téléphone portable etc.

La présente invention concerne plus précisément la programmation du contrôleur de DMA d'un tel SoC.

Dans la mémoire physique, un espace mémoire de taille variable est alloué dynamiquement à chaque programme d'application ou programme utilisateur. Plus spécifiquement, chaque programme utilisateur n'a accès qu'à une partie des pages de la mémoire physique. Ces pages forment un espace mémoire (éventuellement discontinu) qui est adressé au niveau du bus mémoire par des adresses physiques, mais qui est connu du programme utilisateur via un espace d'adressage (en général continu), dit espace d'adressage virtuel auquel le programme accède avec des adresses virtuelles. L'espace d'adressage virtuel est propre au programme utilisateur. La relation qui lie les adresses virtuelles dans ledit espace d'adressage et les adresses physiques dans la mémoire physique est stockée sous la forme d'une table de traductions appelée table des pages, qui est gérée par le système d'exploitation et stockée dans la mémoire principale. Les dernières traductions d'adresses calculées par l'unité de rechargement de table de la MMU sont stockées dans une mémoire cache spécifique appelée TLB (TLB, de l'anglais "Translation Look-aside Buffer").

De façon connue, chaque entrée ("Entry" en anglais) de la TLB, i.e., chaque ligne correspondant à une traduction dans la TLB comprend un identificateur d'espace d'adressage (ou ASID, de l'anglais "Adress Space IDentifier") afin de distinguer des adresses virtuelles identiques dans des espaces d'adressage différents. Chaque ASID est respectivement associé, de manière univoque, à un espace d'adressage déterminé du système.

Le contrôleur de DMA effectue des transferts de données entre la mémoire interne du SoC et des entités telles que des dispositifs mémoires périphériques (par exemple, des disques), à partir d'informations qui lui sont fournies. Ces informations comportent l'adresse physique de source du transfert, l'adresse physique de destination du transfert et enfin la taille de la zone mémoire à transférer.

Dans l'art antérieur, un programme requérant une programmation du contrôleur de DMA en vue d'un transfert DMA s'exécutant sur le SoC en mode utilisateur (appelé encore mode applicatif ou mode non-privilégié) fournit une adresse virtuelle, qui est l'adresse virtuelle de la source du transfert DMA ou de la destination du transfert DMA, au système d'exploitation ou OS ("Operating System"). L'OS, s'exécutant en mode privilégié (appelé encore mode superviseur ou mode noyau) prend alors la main, traduit l'adresse virtuelle fournie en une adresse physique correspondante. Il requiert successivement la mémorisation de l'adresse physique de source du transfert obtenue dans le registre de source, la mémorisation de l'adresse de destination dans le registre de destination et enfin la mémorisation de la taille dans le registre de taille, et ce à partir de l'adresse virtuelle des registres. L'OS supervise ensuite le transfert réalisé par le contrôleur de DMA à partir des informations figurant dans ses registres et avertit le programme initiateur de la requête, du résultat du transfert.

Les instructions de mémorisation utilisées généralement sont du type : "STORE pa_src@dma_src_reg_adr", "STORE pa_dest@dma_dest_reg_adr" et "STORE size@dma_size_reg_adr", où "pa_src" est l'adresse physique de source, "pa_dest" est l'adresse physique de destination, "size" est la taille de la zone mémoire transférée, "dma_src_reg_adr", "dma_dest_reg_adr" et "dma_size_reg_adr" sont respectivement les adresses virtuelles des registres de source, de destination et de taille. La première instruction ci-dessus signifie en langage naturel « mémoriser la donnée correspondant à l'adresse physique de source "pa_src" dans le registre d'adresse de source du contrôleur de DMA dont l'adresse virtuelle est "dma_src_reg_adr" ». Cette instruction fournit donc un argument d'adresse virtuelle "dma_src_reg_adr" et un argument de données "pa_src" à stocker à l'adresse fournie comme argument d'adresse.

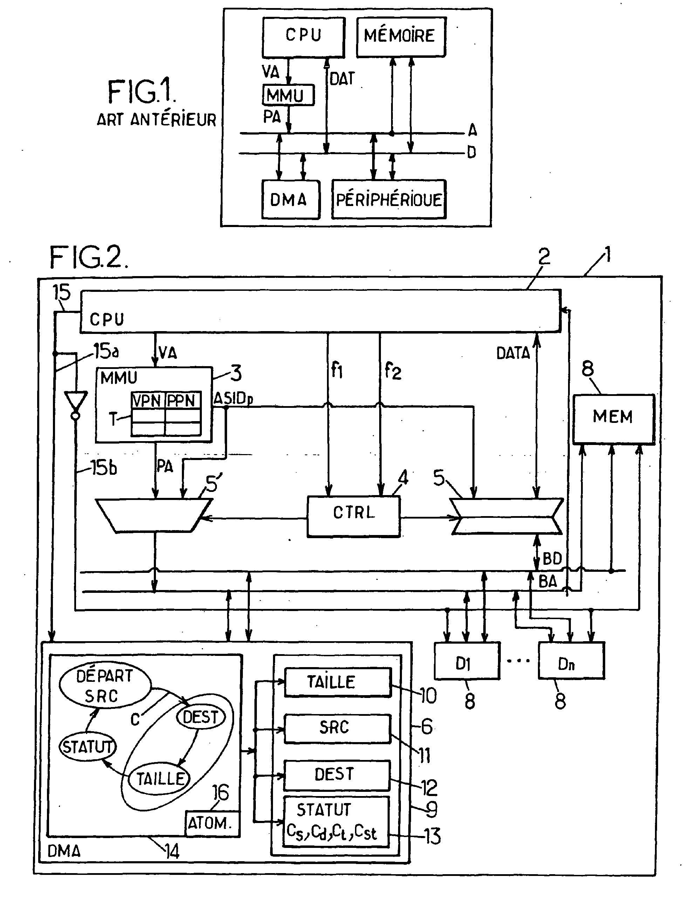

En référence à la figure 1 représentant schématiquement un exemple de SoC tel que considéré précédemment, le déroulement d'une programmation du contrôleur de DMA suivant l'art antérieur est le suivant : l'adresse virtuelle "dma_src_reg_adr" est appliquée par la CPU à destination de la MMU sur le bus d'adresses virtuelles VA. La MMU la traduit en une adresse physique, vérifie les droits d'accès à cette adresse physique, puis l'applique sur le bus d'adresses physiques PA, par lequel elle est mise à disposition notamment du contrôleur de DMA sur le bus général A qui est relié à un ensemble d'entités comprenant par exemple des contrôleurs de disques, la mémoire physique etc.

En parallèle, l'adresse physique de source "pa_src" est appliquée par la CPU sur le bus de données DAT, à partir duquel elle est mise à disposition sur le bus général de données D, également relié à l'ensemble d'entités.

Les applications de l'adresse de source sur le bus général de données D et de l'adresse du registre de source sur le bus général d'adresses A sont réalisées en fonction du protocole retenu pour la gestion des bus. Suivant les protocoles de gestion de bus, l'adresse physique du registre de source est appliquée par exemple sur le bus général d'adresses A quasi-simultanément à l'application de l'adresse physique de source « pa_src » sur le bus général de données D, ou l'adresse du registre de source est positionnée sur le bus général d'adresses A un coup d'horloge avant le positionnement sur le bus général de données D de l'adresse physique de source (pour un protocole où les adresses sont positionnées un coup d'horloge avant les données correspondantes), ou encore l'une des applications est faite sur le front montant tandis que l'autre est faite sur le front descendant etc.

La traduction est effectuée par la MMU à l'aide d'une table de traduction déterminée.

Plusieurs tentatives ont été récemment effectuées pour programmer le contrôleur de DMA directement par un programme s'exécutant en mode utilisateur, et non plus par l'OS. Ce besoin provient notamment de la proportion très importante du temps requis pour une programmation de contrôleur de DMA par l'OS, par rapport au temps du transfert lui-même des données opéré par le contrôleur de DMA.

Une des difficultés rencontrées provient du fait que les registres du contrôleur de DMA doivent être programmés avec des adresses physiques, alors que les programmes en mode utilisateur n'y ont pas accès et qu'il n'est pas souhaitable, notamment pour des raisons de sécurité, qu'ils y aient accès.

Des solutions sont proposées dans les documents « User-Level DMA without Operating System Kernel Modification », de Evangelos P. Markatos et Manolis G.H. Katevenis, Institute of Computer Science, Science and Technology Park of Crete, 1997 IEEE, « Protected User-Level DMA for the Shrimp Network Interface », de M.A. Blumrich et al., Proc of the 2nd International Symposium on High Performance Computer Architecture, pages 154-165, February 1996 et « Intégration of Message Passing and Shared Memory in the Stanford Flash Multi-Processor », de J. Heinlein et al., Proc. Of the 6th International Conference on Architectural Support for Programming Languages and Operating Systems, pages 38-50, 1994.

Selon ces solutions, le programme utilisateur exécute une instruction de mémorisation à usage général déjà existante dans le jeu d'instructions de la CPU, du type de l'instruction « STORE » évoquée ci-dessus, , mais place comme argument d'adresse l'adresse virtuelle de source ou de destination qu'il désire programmer dans le contrôleur de DMA, et non l'adresse du registre du contrôleur de DMA à programmer. Ceci a pour effet de forcer la MMU à traduire l'adresse virtuelle fournie, qui est une adresse de source ou de destination, en une adresse physique correspondante. Cette technique permet en outre à la MMU de contrôler que le programme utilisateur a bien le droit d'accéder à cette adresse.

Deux difficultés supplémentaires ont dû être prises en compte. Tout d'abord, il faut faire en sorte que le contrôleur de DMA recueille cette adresse physique qui se trouve sur le bus d'adresses A, et l'écrive comme une donnée dans son registre de source ou de destination. Par ailleurs, il faut également permettre que la zone mémoire à laquelle l'adresse physique appliquée sur le bus correspond, ignore l'instruction "STORE" car elle ne lui est pas adressée.

Le document cité ci-dessus fournit une solution à ces problèmes. Cette solution consiste à mettre à 1 le bit le plus significatif (bit de plus fort poids ou MSB) de l'adresse de source ou de destination d'un transfert DMA avant qu'elle ne soit fournie à la MMU. Ainsi le contrôleur de DMA recueille à l'aide de sa machine d'état adaptée, comme une donnée à mémoriser dans un de ses registres, tout mot comportant un MSB à 1 et présent sur le bus d'adresse A.

Cette solution réalise donc un adressage implicite (ou "shadow adressing"), basé sur l'instruction de mémorisation "STORE" et le préfixe 1.

L'inconvénient de cette technique est que le système ne doit comporter aucune zone mémoire ou dispositif périphérique dont l'adresse commence par 1, ce qui divise par deux l'espace mémoire adressable réellement disponible. Ainsi pour un système 32 bits (soit 4 Go), l'espace mémoire adressable en pratique est réduit de moitié, à 2^31 bits (soit 2 Go), ce qui est très pénalisant.

La présente invention vise à pallier cet inconvénient de l'art antérieur.

A cet effet, suivant un premier aspect, l'invention propose un procédé de programmation d'un contrôleur de DMA dans un système sur puce. Ce système sur puce comprend une unité centrale de traitement, une unité de gestion de mémoire adaptée pour traduire une adresse virtuelle en une adresse physique correspondante conformément à une table de traduction déterminée. Il comporte en outre un contrôleur de DMA relié à un bus d'adresses et à un bus de données et comprenant un ensemble de registres comportant au moins un registre de source, un registre de destination et un registre de taille. Le système sur puce comprend en outre des entités reliées au bus d'adresses et au bus de données, chaque entité étant identifiée par une adresse physique respective et étant adressable par application sur le bus d'adresses de ladite adresse physique.

Le procédé comprenant les étapes suivantes mises en oeuvre sous la commande de l'unité centrale de traitement, en réponse à une première instruction dédiée déterminée contenue dans un programme utilisateur et comprenant une adresse virtuelle en tant qu'argument d'adresses :
- l'unité de gestion de mémoire traduit ladite adresse virtuelle en l'adresse physique correspondante ;
- d'une part ladite adresse physique correspondante est appliquée sur le bus d'adresses, d'autre part un signal ayant une première valeur est délivré au contrôleur de DMA et un signal ayant une seconde valeur différente de la première valeur, est délivré aux entités via des fils de commande ;
- le contrôleur de DMA, lorsque le signal qui lui est délivré est à la première valeur, sélectionne un registre parmi le registre de source et le registre de destination et mémorise dans ledit registre ainsi sélectionné, ladite adresse physique correspondante qu'il lit sur le bus d'adresses.

Suivant un second aspect, l'invention propose un système sur puce comprenant :
- un contrôleur de DMA relié à un bus d'adresses et à un bus de données et comprenant un ensemble de registres comportant un registre de source, un registre de destination et un registre de taille;
- des entités reliées au bus d'adresses et au bus de données, chaque entité étant identifiée par une adresse physique respective et étant adressable par application sur le bus d'adresses de ladite adresse physique ;
- une unité centrale de traitement reliée au contrôleur de DMA et aux entités par des moyens respectifs de transmission de signaux de commande, ladite unité centrale de traitement étant adaptée pour, en réponse à au moins une première instruction déterminée d'un programme utilisateur s'exécutant sur ladite unité centrale de traitement, dédiée à la programmation du contrôleur de DMA et comprenant un argument d'adresses indiquant une adresse virtuelle, fournir ladite adresse virtuelle à l'unité de gestion de mémoire ;
- une unité de gestion de mémoire adaptée pour traduire ladite adresse virtuelle fournie en entrée en une adresse physique conformément à une table de traduction déterminée.

Ce système sur puce est en outre adapté pour, en réponse à la réception d'au moins la première instruction, d'une part appliquer ladite adresse physique sur le bus d'adresses, d'autre part délivrer un signal ayant une première valeur au contrôleur de DMA et un signal ayant une seconde valeur différente de la première valeur aux entités via les moyens respectifs de transmission de signaux.

Le contrôleur de DMA est en outre adapté pour, lorsque le signal qui lui est délivré est à la première valeur, sélectionner un registre parmi le registre de source et le registre de destination et mémoriser dans ledit registre ainsi sélectionné, ladite adresse physique appliquée sur le bus d'adresses.

D'autres caractéristiques et avantages de l'invention apparaîtront encore à la lecture de la description qui va suivre. Celle-ci est purement illustrative et doit être lue en regard des dessins annexés sur lesquels :
- la figure 1 est une représentation d'un système sur puce de l'art antérieur ;
- la figure 2 représente un système sur puce selon un mode de réalisation de l'invention.
- La figure 3 représente les différents éléments appliqués sur le bus de données BD et le bus d'adresses BA, ainsi que les niveaux des fils f1 et f2 lors d'une programmation d'un contrôleur de DMA dans un mode de réalisation de l'invention.

On considère dans le mode de réalisation ci-après décrit, un système sur puce 1 avec une architecture standard à N bits, dans laquelle une adresse virtuelle se présente sous la forme d'un nombre formant adresse virtuelle codée sur N bits.

L'architecture considérée par la suite est à 32 bits et telle qu'une adresse virtuelle se présente sous la forme d'un nombre formant adresse de page ou VPN (en anglais "Virtual Page Number") codée sur les 20 bits de poids fort, suivie par un décalage (en anglais "offset ") dans ladite page codé sur les 12 bits de poids faible. L'invention peut toutefois être mise en oeuvre avec tout type d'architecture.

Le système sur puce 1 représenté sur la figure 2 et correspondant à un mode de réalisation de l'invention, comprend une unité centrale de traitement ou CPU 2, sur laquelle s'exécutent des programmes utilisateurs.

Le système sur puce 1 comprend également une MMU 3, un bloc de contrôle 4, un multiplexeur/démultiplexeur 5, un multiplexeur 5' et un contrôleur de DMA 6.

Le système sur puce comprend en outre des entités supplémentaires 8.

Le contrôleur de DMA 6 comporte un ensemble 9 de registres requis pour effectuer la programmation d'un transfert DMA. Cet ensemble 9 de registres comprend un registre de taille 10, un registre de source 11, un registre de destination 12 et un registre de statut 13. Les registres 10, 11, 12 de taille, de source et de destination sont adaptés pour mémoriser respectivement la taille, l'adresse physique de source, et l'adresse physique de destination du transfert DMA à effectuer.

Le contrôleur de DMA 6 comprend également une machine d'états 14, adaptée pour sélectionner un registre de l'ensemble 9 et y mémoriser des informations. La machine d'états 14 comporte un registre d'atomicité 16.

Un bus d'adresses général BA interconnecte la MMU 3, le contrôleur de DMA 6, la CPU 2, et les entités 8.

De la même façon, un bus de données BD interconnecte ces différents éléments.

Les entités 8 sont tous les dispositifs fonctionnels autres que le contrôleur de DMA 6 et sont identifiés dans l'architecture retenue par une adresse physique respective. Ils sont adressables individuellement par application sur le bus d'adresses BA de leur adresse physique respective. Parmi ces dispositifs 8 figurent par exemple une mémoire RAM, des contrôleurs de périphériques (mémoires ou autres) ou dispositifs fonctionnels (Convertisseur Analogique Numérique etc) référencés D₁,....Dₙ.

Le système sur puce 1 comporte un fil de commande 15 dédié à la transmission par la CPU 2 d'un signal de commande. Le fil 15 se sépare en deux parties : un fil de commande dédié 15a et un autre fil de commande dédié 15b. Le fil 15a est relié au contrôleur de DMA 6. Le fil 15b comprend un inverseur et est relié à chacune des entités 8.

Ainsi lorsqu'un signal ayant une valeur donnée logique S est appliqué sur le fil 15, le fil 15a délivre le signal à la valeur logique S au contrôleur de DMA 6, et un signal à la valeur logique inverse *S̅*aux entités 8.

Dans l'exemple considéré, d'un point de vue électrique, le signal appliqué sur le fil 15a peut être égal à une tension positive +V (niveau haut). Le signal appliqué sur le fil 15b est alors égal à une tension négative -V (niveau bas). Dans un autre cas, le signal appliqué sur le fil 15a peut être égal à une tension négative -V (niveau bas). Le signal appliqué sur le fil 15b est alors égal à une tension positive +V (niveau haut). Un signal au niveau haut s'apparente par exemple à une valeur logique de 1 tandis qu'un signal au niveau bas à une valeur logique égale à 0.

Dans le mode de réalisation considéré, les dispositifs 8 sont adaptés pour ignorer les éléments appliqués sur le bus d'adresses BA et sur le bus de données BD lorsque le signal qui leur est délivré par le fil 15b est au niveau bas.

La MMU 3 traduit, de façon connue, une adresse virtuelle de 32 bits qui lui est fournie en entrée, en réalisant uniquement la traduction des bits de plus fort poids indiquant la page (ici les 20 premiers bits), soit la traduction du VPN en numéro de page physique ou PPN (en anglais "Physical Page Number"), à l'aide d'une table T prédéterminée, qui définit un espace d'adressage virtuel propre à chaque programme utilisateur à l'aide d'un ASID. La MMU 3 vérifie également que l'application à l'origine de la traduction possède bien les droits correspondants.

La sortie de la MMU 3 est reliée à une première entrée du multiplexeur 5, et à une première entrée du multiplexeur 5'.

Un bus d'adresses virtuelles VA relie la CPU 2 à l'entrée de la MMU 3. Un bus de données DATA relie la CPU 2 à une seconde entrée du multiplexeur/démultiplexeur 5.

Deux fils f1, f2 relient en outre la CPU 2 à des entrées respectives du bloc de contrôle 4, et peuvent être mis par la CPU 2 respectivement à un niveau haut, ou à un niveau bas.

Le bloc de contrôle 4 commande le multiplexeur/démultiplexeur 5 et le multiplexeur 5', en fonction de l'état des fils f1 et f2. Lorsque le fil f1 est au niveau haut, il les commande pour constituer, à partir des éléments fournis en entrée des multiplexeurs, des éléments de sortie qui sont appliqués sur le bus de données BD pour le multiplexeur/démultiplexeur 5, respectivement sur le bus d'adresses BA pour le multiplexeur 5', conformément au fonctionnement indiqué ci-après.

Lorsque le fil f2 est au niveau haut, le multiplexeur/démultiplexeur 5 est commandé par le bloc de contrôle 4 pour permettre le passage du bus de données BD vers le bus de données DATA, afin que la CPU 2 puisse lire une information de statut appliquée par le contrôleur de DMA sur le bus de données BD.

La CPU 2 est adaptée pour, lors de l'exécution d'une instruction dédiée à la programmation d'un transfert DMA, nommée "StoreDMA (argVA ; argD)" dans la suite et aux figures, où "argVA" est un argument d'adresse virtuelle et "argD" est un argument de données qui est optionnel, placer l'argument d'adresse virtuelle fourni sur le bus VA, placer l'argument de données sur le bus DATA, mettre au niveau haut le fil f1 et mettre au niveau haut le fil 15. Une telle instruction est exécutée quand elle est présente dans un programme utilisateur P.

La MMU 3 traduit l'argument d'adresse virtuelle fourni en une adresse physique correspondante, conformément à la table T. De plus, elle fournit cette adresse physique au multiplexeur 5'.

La table T contient également, à partir de l'adresse virtuelle fournie en entrée à la MMU 3, l'ASID propre au programme utilisateur P. La MMU 3 fournit cet ASID, qui identifie de manière univoque le programme utilisateur P, au multiplexeur/démultiplexeur 5 et au multiplexeur 5'. Dans l'exemple décrit ici, cet ASID est codé sur 8 bits.

En réponse à la mise à l'état haut du fil f1, le bloc de contrôle 4 est adapté pour commander le multiplexeur/démultiplexeur 5 de façon à appliquer sur le bus de données BD un mot comprenant l'ASID dans les 8 bits de poids fort, suivis par l'argument de données fourni sur le bus DATA. En réponse à la mise à l'état haut du fil f1, le bloc de contrôle 4 est en outre adapté pour commander le multiplexeur 5' de façon à appliquer sur le bus d'adresses BA l'adresse physique alors délivrée par la MMU 3 au multiplexeur 5'.

Les applications sur les bus BA et BD sont effectuées sous le contrôle du bloc de contrôle 4 à des moments respectifs liés par rapport à l'autre (par exemple quasi-simultanément, ou l'un un coup d'horloge avant l'autre, etc) et en fonction du protocole de gestion des bus retenus.

La CPU 2 est en outre adaptée pour, lors de l'exécution dans un programme utilisateur P, d'une instruction dédiée à la programmation d'un transfert DMA nommée "LoadDMA (argVA)" dans la suite et aux figures, où "argVA" est un argument d'adresse virtuelle, placer l'argument d'adresse virtuelle fourni sur le bus VA, mettre au niveau haut le fil f2 et mettre au niveau haut le fil 15.

Comme précédemment, à partir de l'adresse virtuelle fournie à la MMU 3 sur le bus VA, l'ASID propre au programme utilisateur P contenu dans la table T est fourni au multiplexeur 5' et au multiplexeur/démultiplexeur 5.

En réponse à la mise à l'état haut du fil f2, le bloc de contrôle 4 est adapté pour commander le multiplexeur 5' de façon à appliquer sur le bus d'adresse BA un mot M' comprenant cet ASID dans les 8 bits de poids fort.

La CPU 2 est adaptée pour mettre au niveau bas le fil 15 pour tous les cas ne correspondant pas à l'exécution de ces instructions "StoreDMA" et "LoadDMA".

Le fonctionnement de la machine d'états 14 du contrôleur de DMA 6 est décrit ci-après.

Quand elle détecte que le signal qui est délivré au contrôleur de DMA 6 sur le fil 15a est au niveau haut, la machine d'état 14 sélectionne au moins un registre parmi les registres 10, 11, 12, 13 de taille, de source, de destination et de statut de l'ensemble 9, et ce en fonction de son état d'avancement selon un cycle C ordonné d'états. Puis elle effectue des opérations de mémorisation ou d'extraction relatives au registre sélectionné.

Le cycle C comporte des états "source", "destination ", "taille ", puis "statut ", avant de revenir à l'état de départ.

Plus précisément lorsque la machine d'états 14 est au début d'une programmation de contrôleur de DMA, elle est dans l'état "source", ce qui lui permet de sélectionner le registre de source 11 lors de la prochaine mise à l'état haut du fil 15a. Puis une fois la sélection du registre 11 effectuée, elle incrémente son pointeur, pointe alors sur le registre de destination 12 et est alors dans l'état "destination" qui lui permet de sélectionner ledit registre de destination 12 lors de la prochaine mise à l'état haut du fil 15a. Puis une fois la sélection du registre de destination 12 effectuée, elle incrémente son pointeur, pointe alors sur le registre de taille 10 et sélectionne ledit registre de taille 10 au cours de la même mise à l'état haut que celle ayant permis la sélection du registre de destination 12. Puis une fois la sélection du registre 10 effectuée, elle incrémente son pointeur, pointe alors sur le registre de statut 13 et est alors en état "statut" qui lui permet de sélectionner ledit registre de statut 13 lors de la prochaine mise à l'état haut du fil 15a. Puis une fois la sélection du registre 13 effectuée, elle pointe à nouveau sur le registre de source 11, et est à nouveau dans l'état "source" dans lequel elle est prête pour la programmation des registres 10, 11, 12, 13 de l'ensemble 9 pour un nouveau transfert DMA. D'autres modes de réalisation de la machine d'états et du contrôleur de DMA seront présentés plus loin.

Dans le mode de réalisation ici décrit, en référence à la figure 2, la machine d'états 14 est en outre adaptée, lorsque le fil 15a est mis au niveau haut et lorsqu'elle est dans un état différent de l'état "statut ", pour capturer, avant d'effectuer une opération de mémorisation dans les registres de taille 10, de destination 12 ou de source 11, les 8 bits de poids fort dans un mot qui est alors appliqué sur le bus de données BD.

Si la machine d'états 14 est dans l'état de départ, ces 8 bits sont mémorisés dans le registre d'atomicité 16. La machine d'états 14 pointe alors sur le registre de source 11. Les éléments appliqués alors sur le bus d'adresses BA sont ensuite mémorisés par la machine d'états 14 dans le registre de source 11. Puis selon que la mémorisation effectuée dans le registre de source 11 s'est déroulée avec succès ou non, la machine d'états 14 renseigne un champ Cₛ dans le registre 13 de statut qui est dédié au statut de la mémorisation des éléments relatifs à la source, avec un code indiquant un succès ou un échec.

Si la machine d'états 14 pointe sur le registre de destination 12, les 8 bits extraits du mot appliqué sur le bus de données BD sont comparés à ceux présents dans le registre d'atomicité 16.

Au cas où ils ne sont pas égaux, la mémorisation à effectuer dans le registre de destination 12 pointé n'est pas réalisée. Et la machine d'états 14 renseigne deux champs (C_{d}, Cₜ) déterminés dans le registre de statut 13 et dédiés au statut des opérations relatives à la mémorisation de l'adresse de la destination, respectivement de la taille, avec un code indiquant un échec.

Au cas où ils sont égaux, la machine d'états 14 mémorise alors les éléments appliqués sur le bus d'adresses BA dans le registre de destination 12. Puis selon que cette mémorisation s'est déroulée avec succès ou non, le registre de statut 13 est mis à jour avec un code indiquant un succès ou un échec de l'opération de mémorisation de l'adresse de destination.

La machine d'états 14 pointe alors sur le registre de taille 10, et les bits suivant les 8 bits extraits dans le mot appliqué sur le bus BD sont mémorisés dans le registre de taille 10. Et la machine d'états 14 renseigne le champ déterminé Cₜ dans le registre de statut 13 avec le code indiquant un succès ou un échec, selon que cette opération de mémorisation de la taille s'est bien déroulée ou non.

La machine d'états 14 est adaptée pour capturer, lorsqu'elle pointe sur le registre de statut 13 (état de "statut "), les 8 bits extraits du mot alors appliqué sur le bus d'adresse BA et pour les comparer à ceux présents dans le registre d'atomicité 16. Au cas où ils ne sont pas égaux, la machine d'états 14 renseigne un champ Cₛₜ dédié à l'opération de statut dans le registre 13 de statut avec un code indiquant un échec.

Puis, indépendamment de l'égalité ou non entre les 8 bits extraits du mot appliqué sur le bus BA et de ceux présents dans le registre d'atomicité 16, elle applique alors sur le bus de données BD le contenu du registre de statut.

Cette application permet de fournir un rapport à la CPU 2 sur les opérations effectuées pour la programmation du transfert DMA.

Par ailleurs un programme utilisateur P s'exécute sur la CPU 2 pour effectuer une opération de programmation du contrôleur de DMA 6 à l'aide d'une adresse virtuelle de source VA_SRC de 32 bits, d'une adresse virtuelle de destination VA_DEST de 32 bits et d'une taille t de zone mémoire à transférer.

Il comporte ainsi une séquence Seq de trois instructions qui vont s'exécuter successivement.

La séquence Seq d'instructions comporte les instructions « StoreDMA » et « LoadDMA » indiquées précédemment avec des arguments respectifs, telles que :
"StoreDMA VA_SRC "(instruction "S1"), puis
"StoreDMA (VA_DEST ; t)" (instruction "S2"), puis
"LoadDMA VA_DEST" (instruction "L").

Lors de l'exécution de l'instruction S1 "StoreDMA VA_SRC", la CPU 2 place l'argument d'adresse virtuelle fourni VA_SRC sur le bus VA et, met le fil f1 au niveau haut.

La MMU 3 traduit l'argument d'adresse virtuelle fourni VA_SRC en une adresse physique PA_SRC conformément à la table T, qui contient également l'ASID propre au programme utilisateur P et fournit l'adresse physique PA_SRC en entrée du multiplexeur 5'. La MMU 3 fournit en outre cet ASID, qui identifie le programme utilisateur P d'où provient l'instruction "StoreDMA VA_SRC", en entrée du multiplexeur 5' et du multiplexeur/démultiplexeur 5.

Et le multiplexeur/démultiplexeur 5 est commandé par le bloc de contrôle 4 pour permettre l'application sur le bus de données BD d'un mot M1 comportant 8 bits de poids fort égaux à l'ASID qui lui est fourni en entrée par la MMU 3. Aucun argument de données n'ayant été fourni avec l'instruction S1, le mot M1 ne comporte que ces 8 bits.

Parallèlement à cette application sur le bus de données BD, d'une part, le multiplexeur 5' est commandé par le bloc de contrôle 4 pour permettre l'application de l'adresse physique PA_SRC, issue de la traduction effectuée par la MMU 3, sur le bus d'adresses BA. D'autre part, la CPU 2 commande la mise à niveau haut du fil 15, et par conséquent la mise au niveau haut du fil 15a et la mise au niveau bas du fil 15b.

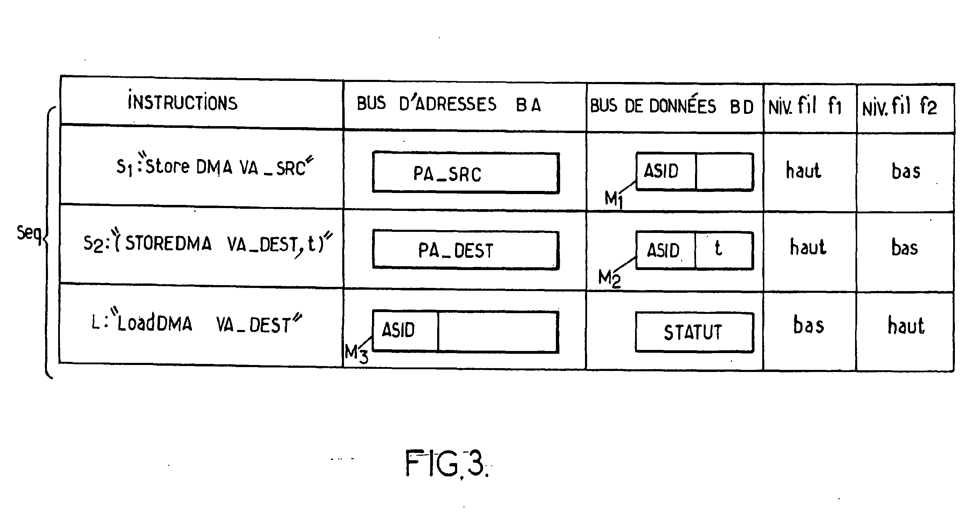

Les applications sur les bus BA et BD et les niveaux des fils f1 et f2 sont représentées sur la figure 3, qui est un tableau où chaque ligne correspond à une instruction de programmation de contrôleur de DMA exécutée sur la CPU 2 conformément au déroulement de la séquence Seq, puis de la séquence Seq2 (colonne "instructions"), aux éléments appliqués sur le bus d'adresse BA (colonne "bus d'adresses BA" et sur le bus de données BD (colonne "bus de données BD") et aux niveaux des fils f1 et f2, suite à l'exécution par la CPU 2 de ladite instruction.

La machine d'états 14 du contrôleur de DMA 6 est dans son état de départ d'une programmation de transfert DMA, selon le cycle donné C. Elle pointe donc sur le registre de source 11. Quand elle détecte que le fil 15a est au niveau haut, elle extrait les 8 premiers bits du mot M1 alors appliqué sur le bus de données BD et les mémorise dans le registre d'atomicité 16. De plus, elle mémorise l'adresse PA_SRC appliquée sur le bus d'adresses BA dans le registre de source 11. Puis elle renseigne le champ Cₛ dans le registre 13 de statut et incrémente son pointeur de façon à pointer sur le registre de destination 12, conformément au cycle C.

Lors de l'exécution de l'instruction S2 "StoreDMA (VA_DEST ; t)", la CPU 2 place l'argument d'adresse virtuelle fourni VA_DEST sur le bus VA, l'argument de données t sur le bus de données DATA et met au niveau haut le fil f1.

La MMU 3 traduit l'argument d'adresse virtuelle fourni VA_DEST en adresse physique PA_DEST conformément à la table T, qui contient également l'ASID propre au programme utilisateur P. La MMU 3 fournit cet ASID en entrée du multiplexeur 5' et du multiplexeur/démultiplexeur 5.

La MMU 3 fournit l'adresse virtuelle VA_DEST au multiplexeur 5'.

Le multiplexeur/démultiplexeur 5 est commandé par le bloc de contrôle 4 pour permettre l'application sur le bus de données BD d'un mot M2 représenté à la figure 3 et comportant 8 bits de poids fort égaux à l'ASID qui lui est fourni en entrée par la MMU 3, et comportant, codée à partir du 9^{ème} bit, la taille t fournie en entrée du multiplexeur/démultiplexeur 5 par le bus DATA.

Le multiplexeur 5' est commandé par le bloc de contrôle 4 pour permettre l'application sur le bus d'adresses BA de l'adresse physique PA_DEST issue de la traduction effectuée par la MMU 3. La CPU 2 commande la mise à niveau haut du fil 15, et par conséquent la mise au niveau haut du fil 15a et la mise au niveau bas du fil 15b.

La machine d'états 14 du contrôleur de DMA 6 pointe sur le registre de destination 12. Quand elle détecte que le fil 15a est au niveau haut, elle extrait les 8 premiers bits du mot M2 alors appliqué sur le bus de données BD et les comparent à ceux mémorisés dans le registre d'atomicité 16.

S'ils sont égaux, elle mémorise l'adresse PA_DEST appliquée sur le bus d'adresses BA dans le registre de destination 12, renseigne le champ C_{d} dans le registre 13 de statut, incrémente son pointeur de manière à pointer, conformément au cycle C, sur le registre de taille 10. Puis elle extrait les bits suivant les 8 premiers bits codant l'ASID propre au programme utilisateur P dans le mot M2 et les mémorise dans le registre de taille 10. Puis elle renseigne le champ Cₜ dans le registre 13 de statut.

S'ils ne sont pas égaux, les mémorisations à effectuer dans les registres de destination 12 et de taille 10 ne sont pas réalisées. Et la machine d'états 14 renseigne les champs C_{d} et Cₜ avec le code indiquant un échec.

Lors de l'exécution de la dernière instruction L ("LoadDMA VA_DEST") de la séquence Seq dans le programme utilisateur P, la CPU 2 place l'argument d'adresse virtuelle fourni (VA_DEST) sur le bus VA et met au niveau haut le fil f2.

La MMU 3 traduit l'argument d'adresse virtuelle fourni VA_DEST en adresse physique PA_DEST conformément à la table T et fournit l'ASID correspondant en entrée du multiplexeur 5' et du multiplexeur/démultiplexeur 5.

Et le multiplexeur 5' est commandé par le bloc de contrôle 4 pour permettre l'application sur le bus d'adresses BA d'un mot M3 représenté en figure 3 comportant 8 bits de poids fort égaux à l'ASID_{P} qui lui est fourni en entrée par la MMU 3.

Le multiplexeur/démultiplexeur 5 est commandé par le bloc de contrôle 4 pour permettre le passage du bus de données BD vers le bus de données DATA, afin que la CPU 2 puisse lire le statut une fois appliqué par le contrôleur de DMA 6.

La CPU 2 commande en parallèle la mise à niveau haut du fil 15, et par conséquent la mise au niveau haut du fil 15a et la mise au niveau bas du fil 15b.

La machine d'états 14 du contrôleur de DMA 6 pointe alors sur le registre de statut 13. Quand elle détecte que le fil 15a est au niveau haut, elle extrait les 8 premiers bits du mot M3 alors appliqué sur le bus d'adresses BA et les comparent à ceux mémorisés dans le registre d'atomicité 16.

S'ils sont différents, elle inscrit un code d'échec dans le champ Cₛₜ du registre de statut 13.

Puis, que les identifiants soient égaux ou non, elle sélectionne le registre de statut 13, applique son contenu sur le bus de données BD et incrémente ensuite son pointeur de façon à revenir sur le point de départ du cycle C de la machine d'états 14.

Le traitement de la séquence Seq pour la programmation du contrôleur de DMA 6 est ainsi achevé.

Le contrôleur de DMA 6 détient à présent les données de source, de taille et de destination dont il a besoin pour réaliser le transfert.

L'invention, en introduisant la nouvelle instruction dédiée « StoreDMA » permet de réaliser la programmation du contrôleur de DMA sans offrir aux programmes utilisateurs l'accès aux adresses physiques et sans présenter l'inconvénient de faire perdre un espace mémoire adressable important, comme dans les solutions de l'art antérieur, tout en étant compatible avec une CPU, une MMU, et une mémoire standards à 32 bits.

L'instruction « LoadDMA » permet de contrôler la bonne réalisation des opérations de programmation.

L'invention permet de ne pas modifier la MMU et n'apporte ainsi pas de dégradation signifiante au traitement des adresses virtuelles fournies à la MMU pour traduction et ne concernant pas une programmation du contrôleur DMA (lorsque les fils f1 et f2 sont au niveau bas).

Lors d'une programmation du contrôleur DMA, les entités 8 (par exemple la mémoire RAM) sont commandées par la mise au niveau bas du fil 15b, pour ne pas considérer les éléments alors placés sur le bus d'adresses BA et les éléments correspondants placés sur le bus de données BD. Ainsi même si l'adresse d'une entité 8 est appliquée sur le bus d'adresses (comme source ou destination de transfert), cette entité ne va pas considérer que les éléments correspondants appliqués sur le bus de données BD lui sont destinés. A l'inverse, si on veut adresser les entités 8, le fil 15b sera mis au niveau haut et le fil 15a au niveau bas.

Dans un mode de réalisation différent de celui décrit ci-dessus, l'information de taille t est délivrée au contrôleur de DMA à l'aide d'une instruction spécifique de l'art antérieur, du type "STORE t @dma_size_reg_adr", où "dma_size_reg_adr" est l'adresse virtuelle du registre de taille. Dans ce cas, le cycle C de la machine d'états du DMA ne comporte plus d'état relatif à la taille, car le registre de taille est sélectionné directement sur détection par le contrôleur de DMA de l'adresse physique du registre de taille sur le bus d'adresses BA.

Dans un autre mode de réalisation, le système sur puce 1 est adapté pour, lorsque l'instruction de programmation reçue est l'instruction "L" (fil f2 au niveau haut), insérer dans le mot à appliquer alors sur le bus d'adresses BA (M₃) un code X_{ST} indiquant le registre de statut.

Le contrôleur de DMA est alors adapté pour lorsque le fil 15a est au niveau haut, sélectionner le registre de statut dans un mot appliqué sur le bus d'adresses BA et comportant le code X_{ST}. Le registre de statut pouvant être ainsi désigné explicitement dans un mot sur le bus de données, le cycle de la machine d'états n'est alors sollicité que dans les cas où le registre à sélectionner n'est pas désigné explicitement. Le cycle, dans le cas où un code a été défini pour le registre de statut, n'a alors que 3 états : un état "source" de départ, un état "destination" et un état "taille".

Dans un autre mode de réalisation, la machine d'états, par exemple avec un cycle à 3 états comme cité ci-dessus, est intégrée au bloc de contrôle (elle ne figure plus alors dans le contrôleur de DMA). L'état est modifié selon le cycle au fur et à mesure de la réception d'une instruction "StoreDMA" (fil f1 au niveau haut). Dans ce cas, un code X_{S}, respectivement X_{DEST,} est inséré dans le mot appliqué sur le bus de données BD lorsque que le fil f1 est au niveau haut. Ainsi, lorsque le fil f1 est au niveau haut, si l'état courant du cycle est l'état "destination", la machine d'états dans le bloc de contrôle sélectionne le code X_{D} et si l'état courant du cycle est l'état "source", il sélectionne le code X_{S}. Puis le code sélectionné est inséré à la suite de l'ASID dans le mot alors appliqué sur le bus de données BD. Dans ce mode de réalisation, le contrôleur de DMA est adapté pour déterminer le registre à sélectionner en fonction du code X_{S}, X_{D}, ou X_{ST} dans le mot appliqué sur le bus de données BD (en particulier, si le code est X_{D}, il sélectionne le registre de destination pour y mémoriser l'adresse appliquée sur le bus d'adresse BA, puis le registre de taille pour y mémoriser la taille figurant également dans le mot appliqué sur le bus de données BD).

L'utilisation des identifiants (ici l'ASID relatif au programme utilisateur P qui a généré l'instruction) permet de vérifier l'atomicité des instructions qui se succèdent au niveau du contrôleur de DMA. Cette disposition permet de repérer l'insertion d'une instruction provenant d'un programme utilisateur P' différent du programme utilisateur P et de ne pas mélanger les informations relatives à plusieurs transferts DMA. Lorsque le contrôleur de DMA est un contrôleur de DMA multi-canaux, c'est-à-dire apte à renseigner plusieurs ensembles de registres (du type de l'ensemble 9 de registres) en parallèle, l'identifiant permet en outre de sélectionner le registre de taille, source, destination ou statut, dans l'ensemble qui concerne le programme P.

Dans un autre mode de réalisation, les identifiants des programmes utilisateurs effectuant une programmation de contrôleur de DMA peuvent ne pas être pris en compte dans la machine d'états. Dans ce cas, il n'y a pas besoin du registre d'atomicité 16, ni de transmettre l'identifiant au contrôleur de DMA. D'autres dispositions sont alors prises pour s'affranchir de problèmes de non-atomicité des instructions de programmation de contrôleur de DMA.

Dans un autre mode de réalisation, l'instruction "LoadDMA" pour connaître le statut de la programmation peut être utilisée après chaque instruction "StoreDMA".

Dans un autre mode de réalisation, l'argument d'adresse virtuelle de l'instruction "LoadDMA" est l'adresse virtuelle de source VA_SRC, qui correspond au même ASID que l'adresse virtuelle VA_DEST.

Dans un mode de réalisation, l'instruction « LoadDMA » ne comporte pas d'argument d'adresse. Dans ce cas, toutefois, l'atomicité de cette instruction avec les précédentes n'est pas garantie.

## Revendications

1. Procédé de programmation d'un contrôleur de DMA dans un système sur puce (1) comprenant une unité (2) centrale de traitement, une unité (3) de gestion de mémoire adaptée pour traduire une adresse virtuelle en une adresse physique correspondante conformément à une table (T) de traduction déterminée, un contrôleur de DMA (6) relié à un bus d'adresses (BA) et à un bus de données (BD) et comprenant un ensemble (9) de registres comportant au moins un registre (11) de source, un registre (12) de destination et un registre (10) de taille, et en outre des entités (8) reliées au bus d'adresses (BA) et au bus de données (BD), chaque entité étant identifiée par une adresse physique respective et étant adressable par application sur le bus d'adresses (BA) de ladite adresse physique, ledit procédé comprenant les étapes suivantes mises en oeuvre sous la commande de l'unité centrale de traitement, en réponse à une première instruction dédiée déterminée (S1, S2) contenue dans un programme utilisateur (P) et comprenant une adresse virtuelle (VA_SRC, VA_DEST) en tant qu'argument d'adresses (argVA) :
- l'unité (3) de gestion de mémoire traduit ladite adresse virtuelle en l'adresse physique correspondante (PA_SRC, PA_DEST) ;
- d'une part ladite adresse physique correspondante est appliquée sur le bus d'adresses (BA), d'autre part un signal (15a) payant une première valeur est délivré au contrôleur de DMA et un signal (15b) ayant une seconde valeur différente de la première valeur, est délivré aux entités via des fils de commande ;
- le contrôleur de DMA (6), lorsque le signal qui lui est délivré est à la première valeur, sélectionne un registre parmi le registre de source et le registre de destination et mémorise dans ledit registre ainsi sélectionné, ladite adresse physique correspondante qu'il lit sur le bus d'adresses.

2. Procédé de programmation d'un contrôleur de DMA selon la revendication 1, selon lequel les entités (8), lorsque le signal qui leur est délivré est à la seconde valeur, ignorent les informations qui sont alors appliquées sur le bus d'adresses (BA) et sur le bus de données (BD).

3. Procédé de programmation d'un contrôleur de DMA selon la revendication 1 ou la revendication 2, selon lequel :
- en réponse à la première instruction (S1, S2), on détermine en outre un identifiant (ASID) du programme utilisateur (P) et un premier mot (M1, M2) comprenant ledit identifiant est constitué et appliqué sur le bus de données (BD) ; et
- le contrôleur de DMA (6), lorsque le signal qui lui est délivré est à la première valeur, sélectionne le registre (11, 12) en fonction dudit identifiant.

4. Procédé de programmation d'un contrôleur de DMA selon l'une quelconque des revendications précédentes, selon lequel:
- la première instruction (S1, S2) comprend en outre un argument de données (argD) indiquant une information de taille (t), et le premier mot (M2) appliqué sur le bus de données (BD) comprend en outre ladite information de taille ; et
- lorsque le signal délivré au contrôleur de DMA (6) a la première valeur, ledit contrôleur de DMA sélectionne en outre le registre de taille (10), extrait la taille du premier mot appliqué sur le bus de données et mémorise la taille ainsi extraite dans le registre de taille.

5. Procédé de programmation d'un contrôleur de DMA selon l'une quelconque des revendications précédentes, selon lequel, l'ensemble (9) de registres du contrôleur de DMA (6) comportant en outre un registre de statut (13), en réponse à une deuxième instruction (L) dédiée déterminée reçue par l'unité (2) centrale de traitement d'un programme utilisateur (P) :
- on détermine un identifiant (ASID) dudit programme utilisateur (P) ; et
- d'une part, on applique sur le bus d'adresses (BA) un deuxième mot (M3) comprenant ledit identifiant, et d'autre part un signal ayant la première valeur est délivré au contrôleur de DMA et un signal ayant la seconde valeur est délivré aux entités (8) via les fils de commande ;
- la première valeur prise par le signal délivré au contrôleur de DMA (6) ayant été identifiée, ledit contrôleur de DMA sélectionne le registre de statut et applique le contenu dudit registre de statut (13) sur le bus de données (BD).

6. Procédé de programmation d'un contrôleur de DMA selon l'une quelconque des revendications précédentes, selon lequel le contrôleur de DMA (6) comportant une machine (14) d'états, au moins la sélection du registre de source et la sélection du registre de destination parmi les registres (10,11,12,13) de l'ensemble (9) sont effectuées en fonction de l'avancement de ladite machine d'états dans un cycle (C) ordonné d'états.

7. Procédé de programmation d'un contrôleur de DMA selon la revendication 3 ou la revendication 5, selon lequel l'identifiant du programme utilisateur (P) est un identificateur d'espace d'adressage, (ASID) qui est stocké dans la table (T) de l'unité (3) de gestion de mémoire pour chaque programme utilisateur du système sur puce (1) et qui est délivré par l'unité de gestion de mémoire lorsqu'elle réalise une opération de traduction d'une adresse virtuelle (VA_SRC, VA_DEST).

8. Procédé de programmation d'un contrôleur de DMA selon l'une quelconque des revendications précédentes, selon lequel le signal (15a) délivré au contrôleur de DMA (6) est l'inverse logique du signal (15b), délivré aux entités (8).

9. Système sur puce (1) comprenant :
- un contrôleur de DMA (6) relié à un bus d'adresses (BA) et à un bus de données (BD) et comprenant un ensemble (9) de registres comportant un registre de source (11), un registre de destination (12) et un registre de taille (10) ;
- des entités (8) reliées au bus d'adresses (BA) et au bus de données (BD), chaque entité étant identifiée par une adresse physique respective et étant adressable par application sur le bus d'adresses (BA) de ladite adresse physique ;
- une unité (2) centrale de traitement reliée au contrôleur de DMA et aux entités par des moyens respectifs de transmission de signaux de commande, ladite unité centrale de traitement étant adaptée pour, en réponse à au moins une première instruction (S1, S2) déterminée d'un programme utilisateur (P) s'exécutant sur ladite unité centrale de traitement, dédiée à la programmation du contrôleur de DMA et comprenant un argument d'adresses (argVA) indiquant une adresse virtuelle, fournir ladite adresse virtuelle à l'unité de gestion de mémoire;
- une unité (3) de gestion de mémoire adaptée pour traduire ladite adresse virtuelle (VA_SRC, VA_DEST) fournie en entrée en une adresse physique (PA_SRC, PA_DEST) conformément à une table de traduction (T) déterminée et **caractérisé en ce que;**
ledit système sur puce (1) est adapté pour, en réponse à la réception d'au moins la première instruction, d'une part appliquer ladite adresse physique (PA_SRC, PA_DEST) sur le bus d'adresses (BA), d'autre part délivrer un signal (15a) ayant une première valeur au contrôleur de DMA et un signal (15b) ayant une seconde valeur différente de la première valeur aux entités via les moyens respectifs de transmission de signaux ;
et le contrôleur de DMA (6) est adapté pour, lorsque le signal qui lui est délivré est à la première valeur, sélectionner un registre parmi le registre de source (11) et le registre de destination (12) et mémoriser dans ledit registre ainsi sélectionné, ladite adresse physique appliquée sur le bus d'adresses.

10. Système sur puce (1) selon la revendication 9, dans lequel les entités (8) sont adaptées pour lorsqu'un signal qui leur est délivré sur les moyens de transmission les reliant à la CPU est à la seconde valeur, ignorer les informations appliquées sur le bus d'adresses (BA) et sur le bus de données (BD).

11. Système sur puce (1) selon la revendication 9 ou la revendication 10, comprenant des moyens pour, en réponse à la première instruction (S1, S2), déterminer un identifiant (ASID) du programme utilisateur (P), ledit système sur puce étant adapté en outre pour constituer un premier mot (M1, M2) comprenant ledit identifiant et appliquer ledit premier mot sur le bus de données (BD) ; et dans lequel le contrôleur de DMA (6) est adapté pour, lorsque le signal qui lui est délivré est à la première valeur, sélectionner le registre en fonction dudit identifiant présent dans le premier mot appliqué sur le bus de données.

12. Système sur puce (1) selon l'une quelconque des revendications 9 à 11, dans lequel la première instruction (S2) comprend en outre un argument de données (argD) indiquant une information de taille (t), et le système sur puce est adapté pour inclure ladite taille dans le premier mot (M2) appliqué sur le bus de données (BD) ; et le contrôleur de DMA (6) est adapté pour, lorsque le signal qui lui est délivré est à la première valeur, sélectionner en outre le registre de taille (10) pour extraire la taille dudit premier mot appliqué sur le bus de données et mémoriser la taille ainsi extraite dans le registre de taille.

13. Système sur puce (1) selon l'une quelconque des revendications 9 à 12, dans lequel :
- l'ensemble (9) de registres du contrôleur de DMA (6) comporte en outre un registre de statut (13) ; et
- ledit système sur puce est adapté pour, en réponse à une deuxième instruction (L) dédiée déterminée reçue par l'unité (2) centrale de traitement d'un programme utilisateur (P), déterminer un identifiant (ASID) dudit programme utilisateur , et d'une part appliquer sur le bus d'adresses (BA) un deuxième mot (M3) comprenant ledit identifiant, et d'autre part délivrer, via les moyens de transmissions de signaux, un signal ayant la première valeur au contrôleur de DMA et un signal ayant la seconde valeur aux entités (8) ; et
- le contrôleur de DMA, lorsque le signal délivré est à la première valeur, est adapté pour sélectionner le registre de statut et appliquer le contenu dudit registre de statut sur le bus de données (BD).

14. Système sur puce (1) selon l'une quelconque des revendications 9 à 13, dans lequel le contrôleur de DMA (6) comporte une machine (14) d'états, ladite machine d'états étant adaptée pour sélectionner un registre de l'ensemble (9) parmi au moins le registre de source (11) et le registre de destination en fonction de l'avancement de ladite machine d'états dans un cycle (C) ordonné d'états.

15. Système sur puce (1) selon la revendication 11 ou la revendication 13, dans lequel l'identifiant du programme utilisateur (P) est un, identificateur d'espace d'adressage (ASID) qui est stocké dans la table (T) de l'unité (3) de gestion de mémoire pour chaque programme utilisateur du système sur puce, et qui est délivré par l'unité de gestion de mémoire lorsqu'elle réalise une opération de traduction sur une adresse virtuelle (VA_SRC, VA_DEST).

16. Système sur puce (1) selon l'une quelconque des revendications 9 à 15, dans lequel les moyens de transmissions de signaux sont adaptés pour délivrer aux entités (8) un signal (15b) qui est l'inverse logique du signal (15a) délivré au contrôleur de DMA (6).

## Claims

1. Method for programming a DMA controller in a system on a chip (1) comprising a central processing unit : (2), a memory management unit (3) designed to translate a virtual address into a corresponding physical address according to a predefined translation table (T), a DMA controller (6) linked to an address bus (BA) and to a data bus (BD) and comprising a set (9) of registers comprising at least a source register (11), a destination register (12) and a size register (10), and also entities (8) linked to the address bus (BA) and to the data bus (BD), each entity being identified by a respective physical address and being addressable by applying said physical address to the address bus (BA), said method comprising the following steps implemented under the control of the central processing unit, in response to a first predefined dedicated instruction (S1, S2) included in a user program (P) and including a virtual address (VA_SRC, VA_DEST) as an address argument (argVA):
- the memory management unit (3) translates said virtual address into the corresponding physical address (PA_SRC, PA_DEST);
- on the one hand said corresponding physical address is applied to the address bus (BA), and on the other hand a signal (15a) having a first value is delivered to the DMA controller and a signal (15b) having a second value different from the first value is delivered to the entities via control wires;
- the DMA controller (6), when the signal delivered to it is at the first value, selects a register from the source register and the destination register and stores in said duly selected register, said corresponding physical address which it reads on the address bus.

2. Method for programming a DMA controller according to Claim 1, wherein the entities (8), when the signal delivered to them is at the second value, disregard the information which is then applied to the address bus (BA) and to the data bus (BD).

3. Method for programming a DMA controller according to Claim 1 or claim 2, wherein:
- in response to the first instruction (S1, S2), an identifier (ASID) of the user program (P) is also determined and a first word (M1, M2) comprising said identifier is formed and applied to the data bus (BD); and
- the DMA controller (6), when the signal delivered to it is at the first value, selects the register (11, 12) according to said identifier.

4. Method for programming a DMA controller according to any one of the preceding claims, wherein :
- the first instruction (S1, S2) also includes a data argument (argD) indicating size information (t), and the first word (M2) applied to the data bus (BD) also includes said size information; and
- when the signal delivered to the DMA controller (6) has the first value, said DMA controller also selects the size register (10), extracts the size of the first word applied to the data bus and stores the duly extracted size in the size register.

5. Method for programming a DMA controller according to any one of the preceding claims, wherein the set (9) of registers of the DMA controller (6) also comprising a status register (13), in response to a second predefined dedicated instruction (L) received by the central processing unit (2) from an user program (P):
- an identifier (ASID) of said user program (P) is determined; and
- on the one hand, a second word (M3) comprising said identifier is applied to the address bus (BA), and on the other hand, a signal having the first value is delivered to the DMA controller and a signal having the second value is delivered to the entities (8) via the control wires;
- the first value taken by the signal delivered to the DMA controller (6) having been identified, said DMA controller selects the status register and applies the content of said status register (13) to the data bus (BD).

6. Method for programming a DMA controller according to any one of the preceding claims, wherein the DMA controller (6) comprising a state machine (14), at least the selection of the source register and the selection of the destination register from the registers (10,11,12,13) of the set (9) are performed as a function of the progress of said state machine in an ordered cycle (C) of states.

7. Method for programming a DMA controller according to Claim 3 or Claim 5, wherein the identifier of the user program (P) is an address space identifier (ASID) which is stored in the table (T) of the memory management unit (3) for each user program of the system on a chip (1) and which is delivered by the memory management unit when it performs a virtual address translation operation (VA_SRC, VA_DEST).

8. Method for programming a DMA controller according to any one of the preceding claims, wherein the signal (15a) delivered to the DMA controller (6) is the logical inverse of the signal (15b) delivered to the entities (8).

9. System on a chip (1) comprising:
- a DMA controller (6) linked to an address bus (BA) and to a data bus (BD) and comprising a set (9) of registers comprising a source register (11), a destination register (12) and a size register (10);
- entities (8) linked to the address bus (BA) and to the data bus (BD), each entity being identified by a respective physical address and being addressable by applying said physical address to the address bus (BA);
- a central processing unit (2) linked to the DMA controller and to the entities by respective control signal transmission means, said central processing unit being designed, in response to at least a first predefined instruction (S1, S2) of a user program (P) running on said central processing unit, dedicated to programming the DMA controller and including an address argument (argVA) indicating a virtual address, to supply said virtual address to the memory management unit;
- a memory management unit (3) designed to translate said virtual address (VA_SRC, VA_DEST) supplied as input into a physical address (PA_SRC, PA_DEST) according to a predefined translation table (T); and **characterized in that**
said system on a chip (1) is designed, in response to the receipt of at least the first instruction, on the one hand to apply said physical address (PA_SRC, PA_DEST) to the address bus (BA), and on the other hand to deliver a signal (15a) having a first value to the DMA controller and a signal (15b) having a second value different from the first value to the entities via respective signal transmission means;
and the DMA controller (6) is designed, when the signal delivered to it is at the first value, to select a register from the source register (11) and the destination register (12) and to store in said duly selected register, said physical address applied to the address bus.

10. System on a chip (1) according to Claim 9, in which the entities (8) are designed, when a signal delivered to them on the transmission means linking them to the CPU is at the second value, to disregard the information applied to the address bus (BA) and to the data bus (BD).

11. System on a chip (1) according to Claim 9 or Claim 10, comprising means to determine, in response to the first instruction (S1, S2), an identifier (ASID) of the user program (P), said system on a chip being further designed to form a first word (M1, M2) comprising said identifier and apply said first word to the data bus (BD); and in which the DMA controller (6) is designed, when the signal delivered to it is at the first value, to select the register as a function of said identifier present in the first word applied to the data bus.

12. System on a chip (1) according to any one of Claims 9 to 11, wherein the first instruction (S2) also comprises a data argument (argD) indicating size information (t), and the system on a chip is designed to include said size in the first word (M2) applied to the data bus (BD); and the DMA controller (6) is designed, when the signal delivered to it is at the first value, also to select the size register (10) to extract the size of said first word applied to the data bus and store the duly extracted size in the size register.

13. System on a chip (1) according to any one of Claims 9 to 12, wherein :
- the set (9) of registers of the DMA controller (6) also includes a status register (13); and
- said system on a chip is designed, in response to a second predefined dedicated instruction (L) received by the central processing unit (2) from a user program (P), to determine an identifier (ASID) of said user program, and on the one hand to apply to the address bus (BA) a first word (M3) comprising said identifier, and on the other hand to deliver, via the signal transmission means, a signal having the first value to the DMA controller and a signal having the second value to the entities (8); and
- the DMA controller, when the signal delivered is at the first value, is designed to select the status register and apply the content of said status register to the data bus (BD).

14. System on a chip (1) according to any one of Claims 9 to 13, wherein the DMA controller (6) comprises a state machine (14), said state machine being designed to select a register of the set (9) from at least the source register (11) and the destination register as a function of the progress of said state machine in an ordered cycle (C) of states.

15. System on a chip (1) according to Claim 11 or Claim 13, wherein the identifier of the user program (P) is an address space identifier (ASID) which is stored in the table (T) of the memory management unit (3) for each user program of the system on a chip, and which is delivered by the memory management unit when it performs a translation operation on a virtual address (VA_SRC, VA_DEST).

16. System on a chip (1) according to any one of Claims 9 to 15, wherein the signal transmission means are designed to deliver to the entities (8) a signal (15a) which is the logical inverse of the signal (15b) delivered to the DMA controller (6).

## Patentansprüche

1. Verfahren zum Programmieren eines DMA-Controllers in einem System auf Chip (1), das eine Zentralverarbeitungseinheit (2), eine Speicherverwaltungseinheit (3), die gemäß einer bestimmten Übersetzungstabelle (T) eine virtuelle Adresse in eine entsprechende physikalische Adresse umwandeln kann, einen DMA-Controller (6), der mit einem Adressbus (BA) und einem Datenbus (BD) verbunden ist, und eine Einheit (9) Register, die mindestens Quellenregister (11), ein Zielregister (12) sowie ein Größenregister (10) aufweist, und ferner Einheiten (8), die mit dem Adressbus (BA) und dem Datenbus (BD) verbunden sind, umfasst, wobei jede Einheit durch eine jeweilige physikalische Adresse identifiziert ist und durch Anlegen der physikalischen Adresse auf den Adressbus (BA) adressierbar ist, wobei das Verfahren die folgenden Umsetzungsschritte unter der Steuerung einer Verarbeitungszentraleinheit als Antwort auf eine erste dedizierte bestimmte Anweisung (S1, S2), die in einem Benutzerprogramm (P) enthalten ist und eine virtuelle Adresse (VA_SRC, VA_DEST) als Adressargument (argVA) aufweist, umfasst:
- die Speicherverwaltungseinheit (3) übersetzt die virtuelle Adresse in die entsprechende physikalische Adresse (PA_SCR, PA_DEST),
- ein Teil der entsprechenden physikalischen Adresse wird an den Adressbus (BA) angewandt, andererseits wird an den DMA-Controller ein Signal (15a) mit einem ersten Wert geliefert, und ein Signal (15b) mit einem zweiten, von dem ersten Wert unterschiedlichen Wert wird an die Einheiten über Steuerleitungen geliefert,
- der DMA-Controller (6) wählt, wenn das Signal, das ihm geliefert wird, den ersten Wert hat, eines der Register Quellenregister oder Zielregister aus und speichert in das derart ausgewählte Register die entsprechende physikalische Adresse, die er auf dem Adressbus liest.

2. Verfahren zum Programmieren eines DMA-Controllers nach Anspruch 1, bei dem die Einheiten (8), wenn das Signal, das ihnen geliefert wird, den zweiten Wert hat, die Informationen, die dabei an den Adressbus (BA) und an den Datenbus (BD) angelegt werden, ignorieren.

3. Verfahren zum Programmieren eines DMA-Controllers nach Anspruch 1 oder Anspruch 2, bei dem:
- als Antwort auf die erste Anweisung (S1, S2) ferner ein Identifikator (ASID) des Benutzerprogramms (P) bestimmt und ein erstes Wort (M1, M2), das den Identifikator enthält, gebildet und an den Datenbus (BD) angelegt wird, und
- der Datencontroller (6), wenn das ihm gelieferte Signal den ersten Wert hat, das Register (11, 12) in Abhängigkeit von dem Identifikator auswählt.

4. Verfahren zum Programmieren eines DMA-Controllers nach einem der vorhergehenden Ansprüche, bei dem:
- die erste Anweisung (S1, S2) ferner ein Datenargument (argD) aufweist, das eine Größeninformation (t) anzeigt, und das erste an den Datenbus (BD) angelegte Wort (M2) ferner die Größeninformation enthält, und
- wenn das an den DMA-Controller (6) gelieferte Signal den ersten Wert hat, der DMA-Controller ferner das Größenregister (10) auswählt, die Größe des ersten an den Datenbus angelegten Worts extrahiert und die so extrahierte Größe in das Größenregister speichert.

5. Verfahren zum Programmieren eines DMA-Controllers nach einem der vorhergehenden Ansprüche, bei dem die Einheit (9) Register des DMA-Controllers (6) ferner ein Statusregister (13) aufweist und man als Antwort auf eine zweite dedizierte bestimmte Anweisung (L), die von der Zentralverarbeitungseinheit von einem Benutzerprogramms (P) empfangen wird,
- einen Identifikator (ASID) des Benutzerprogramms (P) bestimmt und
- man einerseits an den Adressbus (BA) ein zweites Wort (M3) anlegt, das den Identifikator enthält, und andererseits wird ein Signal, das den ersten Wert hat, an den DMA-Controller geliefert, und ein Signal, das den zweiten Wert hat wird an die Einheiten (8) über die Steuerleitungen geliefert,
- nachdem der erste Wert, der von dem an den DMA-Controller (6) gelieferten Signal angenommen wird, identifiziert wurde, wählt der DMA-Controller das Statusregister aus und legt den Inhalt des Statusregisters (13) an den Datenbus (BD) an.

6. Verfahren zum Programmieren eines DMA-Controllers nach einem der vorhergehenden Ansprüche, bei dem der DMA-Controller (6) eine Zuständemaschine (14) aufweist, wobei mindestens die Auswahl des Quellenregisters und die Auswahl des Zielregisters aus den Registern (10, 11, 12, 13) der Einheit (9) in Abhängigkeit von dem Fortschreiten der Zuständemaschine in einem geordneten Zuständezyklus (C) ausgeführt wird.

7. Verfahren zum Programmieren eines DMA-Controllers nach Anspruch 3 oder Anspruch 5, bei dem der Identifikator des Benutzerprogramms (P) ein Adressierungsraumidentifikator (ASID) ist, der in der Tabelle (T) der Speicherverwaltungseinheit (3) für jedes Benutzerprogramm des Systems auf Chip (1) gespeichert ist und von der Speicherverwaltungseinheit geliefert wird, wenn sie einen Übersetzungsvorgang einer virtuellen Adresse (VA_SCR, VA_DEST) ausführt.

8. Verfahren zum Programmieren eines DMA-Controllers nach einem der vorhergehenden Ansprüche, bei dem das an den DMA-Controller (6) gelieferte Signal (15a) zu dem an die Einheiten (8) gelieferten Signal (15b) umgekehrt logisch ist.

9. System auf Chip (1) Folgendes umfassend:
- einen DMA-Controller (6), der mit einem Adressbus (BA) und einem Datenbus (BD) verbunden ist und eine Einheit (9) Register aufweist, die ein Quellenregister (11), ein Zielregister (12) und ein Größenregister (10) umfassen,
- Einheiten (8), die mit dem Adressbus (BA) und dem Datenbus (BD) verbunden sind, wobei jede Einheit von einer jeweiligen physikalischen Adresse identifiziert ist und durch Anlegen der physikalischen Adresse an den Adressbus (BA) adressierbar ist,
- eine Verarbeitungszentraleinheit (2), die mit dem DMA-Controller und mit den Einheiten über jeweilige Steuersignalübertragungsmittel verbunden ist, wobei die Verarbeitungszentraleinheit als Antwort auf mindestens eine erste bestimmte Anweisung (S1, S2) eines Benutzerprogramms (P), das auf der Verarbeitungszentraleinheit ausgeführt wird, dem Programmieren des DMA-Controllers zugewiesen ist und ein Adressargument (argVA) enthält, das eine virtuelle Adresse anzeigt, der Speicherverwaltungseinheit die virtuelle Adresse liefern kann,
- eine Speicherverwaltungseinheit (3), die die virtuelle Adresse (VA_SRC, VA_DEST), die am Eingang geliefert wird, gemäß einer bestimmten Übersetzungstabelle (T) in eine physikalische Adresse (PA_SRC, PA_DEST) umwandeln kann, **dadurch gekennzeichnet,**
**dass** das System auf Chip (1) als Antwort auf den Empfang mindestens der ersten Anweisung einerseits die physikalische Adresse (PA_SRC, PA_DEST) an den Adressbus (BA) anlegen und andererseits ein Signal (15a), das einen ersten Wert hat, an den DMA-Controller liefern kann, und ein Signal (15b), das einen zweiten, von dem ersten Wert unterschiedlichen Wert hat, an die Einheiten über die jeweiligen Signalübertragungsmittel liefern kann,
und **dass** der DMA-Controller, wenn das Signal, das ihm geliefert wird, den ersten Wert hat, ein Register aus dem Quellenregister (11) und dem Zielregister (12) auswählen und in dem so ausgewählten Register die physikalische Adresse, die an den Adressbus angelegt wird, auswählen kann.

10. System auf Chip (1) nach Anspruch 9, bei dem die Einheiten (8), wenn ein Signal, das ihnen auf den Übertragungsmitteln, die sie mit der CPU verbinden, geliefert wird, den zweiten Wert hat, die an den Adressbus (BA) und an den Datenbus (BD) angelegten Informationen ignorieren kann.

11. System auf Chip (1) nach Anspruch 9 oder Anspruch 10, das Mittel aufweist, um als Antwort auf die erste Anweisung (S1, S2) einen Identifikator (ASID) des Benutzerprogramms (P) zu bestimmen, wobei das System auf Chip ferner ein erstes Wort (M1, M2) bilden kann, das den Identifikator enthält, und das erste Wort an den Datenbus (BD) anlegen kann, und bei dem der DMA-Controller (6), wenn das Signal, das ihm geliefert wird, den ersten Wert hat, das Register in Abhängigkeit von dem Identifikator auswählen kann, der in dem ersten Wort, das an den Datenbus angelegt wird, gegenwärtig ist.

12. System auf Chip (1) nach einem der Ansprüche 9 bis 11, bei dem die erste Anweisung (S2) ferner ein Datenargument (argD) aufweist, das eine Größeninformation (t) anzeigt, und das System auf Chip die Größe in das erste Wort (M2), das an den Datenbus (BD) angelegt wird, einschließen kann, und bei dem der DMA-Controller (6), wenn das ihm gelieferte Signal den ersten Wert hat, ferner das Größenregister (10) auswählen kann, um die Größe des ersten Worts, das an den Datenbus angelegt wird, zu extrahieren, und die so extrahierte Größe in dem Größenregister speichern kann.

13. System auf Chip (1) nach einem der Ansprüche 9 bis 12, bei dem:
- die Einheit (9) Register des DMA-Controllers (6) ferner ein Zustandsregister (13) aufweist, und
- das System auf Chip als Antwort auf eine zweite dedizierte bestimmte Anweisung (L), die von der Verarbeitungszentraleinheit (2) von einem Benutzerprogramm (P) empfangen wird, einen Identifikator (ASID) des Benutzerprogramms bestimmen und einerseits an den Adressbus (BA) ein zweites Wort (M3) anlegen kann, das den Identifikator enthält, und andererseits über die Signalübertragungsmittel ein Signal, das den ersten Wert hat, an den DMA-Controller liefern kann, und ein Signal, das den zweiten Wert hat, an die Einheiten (8) liefern kann, und
- der DMA-Controller wenn das gelieferte Signal den ersten Wert hat, das Zustandsregister auswählen und den Inhalt des Zustandsregisters an den Datenbus (BD) anlegen kann.

14. System auf Chip (1) nach einem der Ansprüche 9 bis 13, bei dem der DMA-Controller (6) eine Zuständemaschine (14) aufweist, wobei die Zuständemaschine ein Register der Einheit (9) mindestens aus dem Quellenregister (11) und dem Zielregister in Abhängigkeit von dem Fortschreiten der Zuständemaschine in einem geordneten Zuständezyklus (C) auswählen kann.

15. System auf Chip (1) nach Anspruch 11 oder Anspruch 13, bei dem der Identifikator des Benutzerprogramms (P) ein Adressierungsraumidentifikator (ASID) ist, der in der Tabelle (T) der Speicherverwaltungseinheit (3) für jedes Benutzerprogramm des Systems auf Chip gespeichert ist und von der Speicherverwaltungseinheit geliefert wird, wenn sie einen Übersetzungsvorgang auf einer virtuellen Adresse (VA_SRC, VA_DEST) ausführt.

16. System auf Chip (1) nach einem der Ansprüche 9 bis 15, bei dem die Mittel zum Übertragen von Signalen an die Einheiten (8) ein Signal (15b) liefern können, das zu dem Signal (15a), das an den DMA-Controller (6) geliefert wird, umgekehrt logisch ist.
